# EUROPEAN PATENT SPECIFICATION

(11) **EP 4 102 323 B1**
(45) Date of publication and mention of the grant of the patent: **03.04.2024**
(21) Application number: 22175002.9
(22) Date of filing: 24.05.2022
(51) Int. Cl.: G05D 1/00

(54) **VEHICLE REMOTE CONTROL DEVICE, VEHICLE REMOTE CONTROL SYSTEM, VEHICLE REMOTE CONTROL METHOD, AND VEHICLE REMOTE CONTROL PROGRAM**
FAHRZEUGFERNSTEUERUNGSVORRICHTUNG, FAHRZEUGFERNSTEUERUNGSSYSTEM, FAHRZEUGFERNSTEUERUNGSVERFAHREN UND FAHRZEUGFERNSTEUERUNGSPROGRAMM
DISPOSITIF DE TÉLÉCOMMANDE DE VÉHICULE, SYSTÈME DE TÉLÉCOMMANDE DE VÉHICULE, PROCÉDÉ DE TÉLÉCOMMANDE DE VÉHICULE ET PROGRAMME DE TÉLÉCOMMANDE DE VÉHICULE

(30) Priority: 09.06.2021 JP 2021096490
(43) Date of publication of application: 14.12.2022
(73) Proprietor: TOYOTA JIDOSHA KABUSHIKI KAISHA, Toyota-shi Aichi 471-8571 (JP)
(72) Inventor: URANO, Hiromitsu, TOYOTA-SHI, AICHI, 471-8571 (JP); OTAKI, Sho, TOYOTA-SHI, AICHI, 471-8571 (JP); HARADA, Masahiro, TOYOTA-SHI, AICHI, 471-8571 (JP)
(74) Representative: Cabinet Beau de Loménie

(56) References cited:
- US-A1- 2017 192 423
- US-A1- 2018 229 737

## Description

This application claims the benefit of priority from Japanese Patent Application No. 2021-096490, filed on June 09, 2021, to which the person of the art can refer to when considering the present disclosure.

### TECHNICAL FIELD

The present disclosure relates to a vehicle remote control device, a vehicle remote control system, a vehicle remote control method, and a vehicle remote control program for performing remote control of an autonomous driving vehicle.

### BACKGROUND

For example, Japanese Unexamined Patent Publication No. 2020-042764 discloses that a remote operator causes a vehicle capable of autonomous driving to travel by remotely controlling the vehicle. The remote operator remotely controls the vehicle based on information such as a camera image transmitted from the vehicle.

Another example of remote assistance for an autonomous vehicle is shown by the patent application US 2017/192423 A1. Moreover, the patent application US 2018/229737 A1 discloses an autonomous vehicle which is adapted to transfer the control to a passenger in case of scenarios requiring manual intervention, and this in dependency of the detected alertness level of the passenger.

### SUMMARY

When the remote operator remotely controls the vehicle, there may occur cases where the vehicle is remotely controlled even if the state of the remote operator is inappropriate for remote control, for example, the remote operator is not looking at the camera image. In such a case, the vehicle cannot be driven appropriately, which may lead to problems such as obstructing the traffic flow.

Therefore, the present disclosure describes a vehicle remote control device, a vehicle remote control system, a vehicle remote control method, and a vehicle remote control program capable of transmitting appropriate remote control information input by a remote operator to an autonomous driving vehicle.

According to a first aspect of the present disclosure, there is provided a vehicle remote control device that executes remote control of an autonomous driving vehicle by a remote operator, the vehicle remote control device including: an information presentation unit configured to present sensor information of an in-vehicle sensor of the autonomous driving vehicle; an input accepting unit configured to accept an input of the remote control by the remote operator; an operator state determination unit configured to determine whether or not the remote operator is in a proper control state suitable for performing the remote control, based on a gaze state of the remote operator for a gaze target area of the sensor information presented by the information presentation unit; a proper control determination unit configured to determine whether or not the remote control accepted by the input accepting unit is proper based on a result of the determination of the operator state determination unit; and a transmission unit configured to transmit, to the autonomous driving vehicle, remote control information indicating the remote control accepted by the input accepting unit, in which
the operator state determination unit is configured to set the gaze target area to be gazed at by the remote operator with respect to the presented sensor information based on the sensor information, to determine that the remote operator is in the proper control state when the remote operator gazes at the set gaze target area, and to determine that the remote operator is not in the proper control state when the remote operator does not gaze at the set gaze target area,
the proper control determination unit is configured to determine that the accepted remote control is proper when the operator state determination unit determines that the remote operator is in the proper control state when the remote control is accepted, and to determine that the accepted remote control is not proper when the operator state determination unit determines that the remote operator is not in the proper control state when the remote control is accepted, and the transmission unit is configured to transmit, to the autonomous driving vehicle, the remote control information for the remote control determined as being proper by the proper control determination unit, and not to transmit, to the autonomous driving vehicle, the remote control information for the remote control determined as not being proper by the proper control determination unit.

In the vehicle remote control device, when the remote operator inputs the remote control in a state suitable for the remote control (proper control state), the remote control information is transmitted to the autonomous driving vehicle. On the other hand, in the vehicle remote control device, when the remote operator inputs the remote control in a state unsuitable for the remote control, the remote control information is not transmitted to the autonomous driving vehicle. In this way, the vehicle remote control device can transmit, to the autonomous driving vehicle, appropriate remote control information input by the remote operator in the proper control state.

[cancelled]

In the vehicle remote control device, the operator state determination unit may be configured to determine that the remote operator is in the proper control state for a period during which the remote operator is gazing at the gaze target area and a period from when the gazing at the gaze target area ends until a predetermined gaze effective time elapses. In this case, the vehicle remote control device can more appropriately determine whether or not the remote operator is in the proper control state based on the gaze state for the gaze target area.

In the vehicle remote control device, the information presentation unit may be configured to highlight the gaze target area used in the determination by the operator state determination unit when the proper control determination unit determines that the accepted remote control is not proper. In this case, the vehicle remote control device can inform the remote operator of an area at which the remote operator should have gazed in order to be in the proper control state. Thereby, the remote operator can grasp a gaze target area to be gazed at. Then, the remote operator can learn a gazing method needed to be in the proper control state.

According to a second aspect of the present disclosure, there is provided a vehicle remote control system including: an autonomous driving vehicle; and a vehicle remote control device that executes remote control of the autonomous driving vehicle by a remote operator, in which the vehicle remote control device includes: an information presentation unit configured to present sensor information of an in-vehicle sensor of the autonomous driving vehicle; an input accepting unit configured to accept an input of the remote control by the remote operator; an operator state determination unit configured to determine whether or not the remote operator is in a proper control state suitable for performing the remote control, based on a gaze state of the remote operator for a gaze target area of the sensor information presented by the information presentation unit; a proper control determination unit configured to determine whether or not the remote control accepted by the input accepting unit is proper based on a result of the determination of the operator state determination unit; and a transmission unit configured to transmit, to the autonomous driving vehicle, remote control information indicating the remote control accepted by the input accepting unit,
the operator state determination unit is configured to set the gaze target area to be gazed at by the remote operator with respect to the presented sensor information based on the sensor information, to determine that the remote operator is in the proper control state when the remote operator gazes at the set gaze target area, and to determine that the remote operator is not in the proper control state when the remote operator does not gaze at the set gaze target area,
the proper control determination unit is configured to determine that the accepted remote control is proper when the operator state determination unit determines that the remote operator is in the proper control state when the remote control is accepted, and to determine that the accepted remote control is not proper when the operator state determination unit determines that the remote operator is not in the proper control state when the remote control is accepted, the transmission unit is configured to transmit, to the autonomous driving vehicle, the remote control information for the remote control determined as being proper by the proper control determination unit, and not to transmit, to the autonomous driving vehicle, the remote control information for the remote control determined as not being proper by the proper control determination unit, and the autonomous driving vehicle includes: a reception unit configured to receive the remote control information transmitted from the transmission unit; and a traveling controller configured to control traveling of the autonomous driving vehicle based on the received remote control information.

In the vehicle remote control device in the vehicle remote control system, when the remote operator inputs the remote control in a state suitable for the remote control (proper control state), the remote control information is transmitted to the autonomous driving vehicle. On the other hand, in the vehicle remote control device, when the remote operator inputs the remote control in a state unsuitable for the remote control, the remote control information is not transmitted to the autonomous driving vehicle. In this way, the vehicle remote control system can transmit, to the autonomous driving vehicle, appropriate remote control information input by the remote operator in the proper control state.

According to a third aspect of the present disclosure, there is provided a vehicle remote control method that is performed by a vehicle remote control device executing remote control of an autonomous driving vehicle by a remote operator, the vehicle remote control method including: presenting sensor information of an in-vehicle sensor of the autonomous driving vehicle; accepting an input of the remote control by the remote operator; determining whether or not the remote operator is in a proper control state suitable for performing the remote control, based on a gaze state of the remote operator for a gaze target area of the sensor information presented in the step of presenting the sensor information; determining whether or not the remote control accepted in the step of accepting the input is proper based on a result of the determination in the step of determining for the remote operator; and transmitting, to the autonomous driving vehicle, remote control information indicating the remote control accepted in the step of accepting the input, in which
in the step of determining for the remote operator, the gaze target area to be gazed at by the remote operator is set with respect to the presented sensor information based on the sensor information, and a determination is made that the remote operator is in the proper control state when the remote operator gazes at the set gaze target area, and a determination is made that the remote operator is not in the proper control state when the remote operator does not gaze at the set gaze target area,
in the step of determining for the remote control, a determination is made that the accepted remote control is proper when it is determined in the step of determining for the remote operator that the remote operator is in the proper control state when the remote control is accepted, and a determination is made that the accepted remote control is not proper when it is determined in the step of determining for the remote operator that the remote operator is not in the proper control state when the remote control is accepted, and in the step of transmitting, the remote control information for the remote control determined as being proper in the step of determining for the remote control is transmitted to the autonomous driving vehicle, and the remote control information for the remote control determined as not being proper in the step of determining for the remote control is not transmitted to the autonomous driving vehicle.

In the vehicle remote control method, when the remote operator inputs the remote control in a state suitable for the remote control (proper control state), the remote control information is transmitted to the autonomous driving vehicle. On the other hand, in the vehicle remote control method, when the remote operator inputs the remote control in a state unsuitable for the remote control, the remote control information is not transmitted to the autonomous driving vehicle. In this way, in the vehicle remote control method, it is possible to transmit, to the autonomous driving vehicle, appropriate remote control information input by the remote operator in the proper control state.

According to a fourth aspect of the present disclosure, there is provided a vehicle remote control program that operates a remote control ECU of a vehicle remote control device that executes remote control of an autonomous driving vehicle by a remote operator based on an input to an input accepting unit configured to accept the input of the remote control, the vehicle remote control program causing the remote control ECU to function as: an information presentation unit configured to present sensor information of an in-vehicle sensor of the autonomous driving vehicle; an operator state determination unit configured to determine whether or not the remote operator is in a proper control state suitable for performing the remote control, based on a gaze state of the remote operator for a gaze target area of the sensor information presented by the information presentation unit; a proper control determination unit configured to determine whether or not the remote control accepted by the input accepting unit is proper based on a result of the determination of the operator state determination unit; and a transmission unit configured to transmit, to the autonomous driving vehicle, remote control information indicating the remote control accepted by the input accepting unit, in which the proper control determination unit is caused to determine that the accepted remote control is proper when the operator state determination unit determines that the remote operator is in the proper control state when the remote control is accepted, and to determine that the accepted remote control is not proper when the operator state determination unit determines that the remote operator is not in the proper control state when the remote control is accepted, and the transmission unit is caused to transmit, to the autonomous driving vehicle, the remote control information for the remote control determined as being proper by the proper control determination unit, and not to transmit, to the autonomous driving vehicle, the remote control information for the remote control determined as not being proper by the proper control determination unit.

In the vehicle remote control program, when the remote operator inputs the remote control in a state suitable for the remote control (proper control state), the remote control information is transmitted to the autonomous driving vehicle. On the other hand, in the vehicle remote control program, when the remote operator inputs the remote control in a state unsuitable for the remote control, the remote control information is not transmitted to the autonomous driving vehicle. In this way, in the vehicle remote control program, it is possible to transmit, to the autonomous driving vehicle, appropriate remote control information input by the remote operator in the proper control state.

According to various aspects of the present disclosure, it is possible to transmit appropriate remote control information input by the remote operator to the autonomous driving vehicle.

### BRIEF DESCRIPTION OF THE DRAWINGS

FIG. 1 is a diagram for describing a vehicle remote control system according to an embodiment.
FIG. 2 is a block diagram illustrating an example of a configuration of an autonomous driving vehicle.
FIG. 3 is a block diagram illustrating an example of a hardware configuration of an operator interface.
FIG. 4 is a block diagram illustrating an example of a hardware configuration of a vehicle remote control server.
FIG. 5 is a block diagram illustrating an example of a functional configuration of a remote control ECU.
FIGS. 6A and 6B are diagrams illustrating an example of display of a gaze effective time bar.
FIG. 7A is a diagram illustrating a camera image in front of an autonomous driving vehicle presented to a remote operator.
FIG. 7B is a diagram illustrating a camera image behind the autonomous driving vehicle presented to the remote operator.
FIG. 8 is a flowchart illustrating a processing procedure of a vehicle remote control method executed by the vehicle remote control device.

### DETAILED DESCRIPTION

Hereinafter, exemplary embodiments will be described with reference to the drawings. In each drawing, the same or corresponding elements are denoted by the same reference numerals, and repeated description thereof will be omitted.

### [Vehicle Remote Control System]

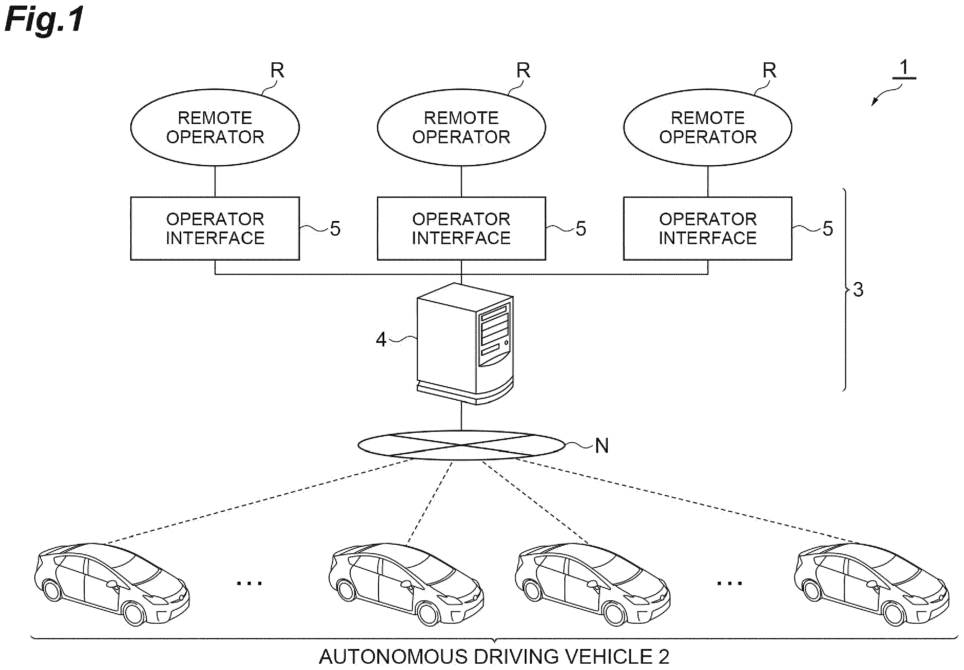

FIG. 1 is a diagram for describing a vehicle remote control system 1 according to an embodiment. The vehicle remote control system 1 illustrated in FIG. 1 includes autonomous driving vehicles 2 and a vehicle remote control device 3. The vehicle remote control system 1 is a system for executing remote control of the autonomous driving vehicles 2 by remote operators R.

The remote operator R is a person who performs remote control for the autonomous driving vehicle 2 to execute remote travel. The remote operator R can perform remote control on the autonomous driving vehicle 2 via the vehicle remote control device 3. The number of remote operators R is not limited, and may be one or two or more. The number of the autonomous driving vehicles 2 capable of communicating with the vehicle remote control device 3 is also not particularly limited. A plurality of remote operators R may take turns to perform remote control on one autonomous driving vehicle 2, and one remote operator R may perform remote control on two or more autonomous driving vehicles 2.

Here, in the present embodiment, the remote control performed by the remote operators R may be of any type as long as the autonomous driving vehicles 2 can travel by remote control. For example, the remote control may include driving support in which the remote operator R substitutes the determination or the like made by the autonomous driving vehicle 2 based on a request from the autonomous driving vehicle 2. Further, for example, the remote control may include a remote instruction as a behavior instruction given to the autonomous driving vehicle 2 by the remote operator R, regardless of whether or not there is a request from the autonomous driving vehicle 2. Further, for example, the remote control may include remote driving of the autonomous driving vehicle 2 that is remotely performed by the remote operator R.

In the vehicle remote control system 1, the remote operator R is requested to input the remote control in a predetermined case such as when the request is made from the autonomous driving vehicle 2, for example. The remote operator R inputs the remote control content to an operator interface 5 of the vehicle remote control device 3. The vehicle remote control device 3 transmits remote control information indicating remote control to the autonomous driving vehicle 2 through a network N. The autonomous driving vehicle 2 travels according to the remote control information.

### [Autonomous Driving Vehicle]

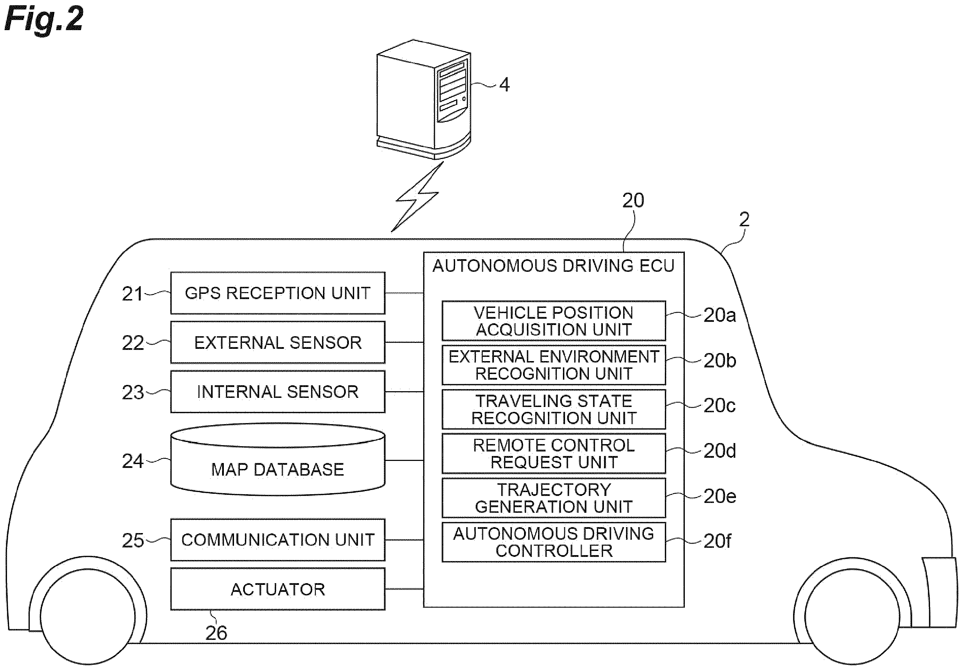

An example of a configuration of the autonomous driving vehicle 2 will be described. FIG. 2 is a block diagram illustrating an example of the configuration of the autonomous driving vehicle 2. As illustrated in FIG. 2, the autonomous driving vehicle 2 includes an autonomous driving electronic control unit (ECU) 20, for example. The autonomous driving ECU 20 is an electronic control unit having a central processing unit (CPU), a read only memory (ROM), a random access memory (RAM), or the like. In the autonomous driving ECU 20, for example, various functions are implemented by executing a program recorded in ROM or RAM with the CPU. The autonomous driving ECU 20 may include a plurality of electronic units.

The autonomous driving ECU 20 is connected to a global positioning system (GPS) reception unit 21, an external sensor (in-vehicle sensor) 22, an internal sensor 23, a map database 24, a communication unit 25, and an actuator 26.

The GPS reception unit 21 measures the position of the autonomous driving vehicle 2 (for example, the latitude and longitude of the autonomous driving vehicle 2) by receiving signals from three or more GPS satellites. The GPS reception unit 21 transmits information on the measured position about the autonomous driving vehicle 2 to the autonomous driving ECU 20.

The external sensor 22 is an in-vehicle sensor that detects an external environment of the autonomous driving vehicle 2. The external sensor 22 includes at least a camera. The camera is an imaging device that captures an image of an external environment of the autonomous driving vehicle 2. The camera is provided, for example, behind a windshield of the autonomous driving vehicle 2 and captures an image in front of the vehicle. The camera transmits imaging information on the external environment of the autonomous driving vehicle 2 to the autonomous driving ECU 20. The camera may be a monocular camera or a stereo camera. A plurality of cameras may be provided, and in addition to the front of the autonomous driving vehicle 2, images of the right and left sides and the rear may be captured. The autonomous driving vehicle 2 may be equipped with an external camera for the remote operator R. The external camera for the remote operator R at least captures an image in front of the autonomous driving vehicle 2. A plurality of the external cameras for the remote operator R may include a plurality of cameras that capture images of the surroundings including areas on the side of and behind the autonomous driving vehicle 2.

The external sensor 22 may include a radar sensor. The radar sensor is a detection device that detects an object around the autonomous driving vehicle 2 using radio waves (for example, millimeter waves) or light. The radar sensor includes, for example, a millimeter wave radar or a light detection and ranging (LIDAR). The radar sensor transmits radio waves or light to the vicinity of the autonomous driving vehicle 2 and detects the object by receiving the radio waves or light reflected by the object. The radar sensor transmits the detected object information to the autonomous driving ECU 20. Objects include moving objects such as pedestrians, bicycles, and other vehicles in addition to fixed objects such as guardrails and buildings. In addition, the external sensor 22 may include a sound detection sensor that detects a sound outside the autonomous driving vehicle 2.

The internal sensor 23 is an in-vehicle sensor that detects a traveling state of the autonomous driving vehicle 2. The internal sensor 23 includes a vehicle speed sensor, an acceleration sensor, and a yaw rate sensor. The vehicle speed sensor is a detector that detects the speed of the autonomous driving vehicle 2. As the vehicle speed sensor, wheel speed sensors that are provided for wheels of the autonomous driving vehicle 2 or for drive shafts that rotate integrally with the wheels and that detect rotation speeds of the respective wheels can be used. The vehicle speed sensor transmits the detected vehicle speed information (wheel speed information) to the autonomous driving ECU 20.

The acceleration sensor is a detector that detects the acceleration of the autonomous driving vehicle 2. The acceleration sensor includes, for example, a longitudinal acceleration sensor that detects the acceleration in the front-rear direction of the autonomous driving vehicle 2. The acceleration sensor may include a lateral acceleration sensor that detects the lateral acceleration of the autonomous driving vehicle 2. The acceleration sensor transmits, for example, acceleration information about the autonomous driving vehicle 2 to the autonomous driving ECU 20. The yaw rate sensor is a detector that detects a yaw rate (rotational angular velocity) of the center of gravity of the autonomous driving vehicle 2 around a vertical axis. As the yaw rate sensor, for example, a gyro sensor can be used. The yaw rate sensor transmits the detected yaw rate information about the autonomous driving vehicle 2 to the autonomous driving ECU 20.

The map database 24 is a database that records map information. The map database 24 is formed in, for example, a recording device such as an HDD mounted on the autonomous driving vehicle 2. The map information includes road position information, road shape information (for example, curvature information), position information about intersections and branch points, and the like. The map information may include traffic regulation information such as legal speed associated with position information. The map information may include target information used for acquiring the position information about the autonomous driving vehicle 2. As the target, a road sign, a road marking, a traffic light, a utility pole, or the like can be used. The map database 24 may be provided in a server capable of communicating with the autonomous driving vehicle 2. The server is not limited to a vehicle remote control server 4.

The communication unit 25 is a communication device that controls wireless communication with the outside of the autonomous driving vehicle 2. The communication unit 25 transmits and receives various information to and from the vehicle remote control server 4 via the network N.

The actuator 26 is a device used for controlling the autonomous driving vehicle 2. The actuator 26 includes at least a drive actuator, a brake actuator, and a steering actuator. The drive actuator controls a supply amount of air to the engine (throttle opening degree) according to a control signal from the autonomous driving ECU 20 to control a driving force of the autonomous driving vehicle 2. When the autonomous driving vehicle 2 is a hybrid vehicle, the control signal from the autonomous driving ECU 20 is input to a motor as a power source in addition to the supply amount of air to the engine, so that the driving force of the autonomous driving vehicle 2 is controlled. When the autonomous driving vehicle 2 is an electric vehicle, the control signal from the autonomous driving ECU 20 is input to a motor as a power source, so that the driving force of the autonomous driving vehicle 2 is controlled. The motor as the power source in these cases constitutes the actuator 26.

The brake actuator controls a brake system according to the control signal from the autonomous driving ECU 20 to control a braking force applied to the wheels of the autonomous driving vehicle 2. As the brake system, for example, a hydraulic brake system can be used. The steering actuator controls driving of an assist motor for controlling a steering torque in an electric power steering system according to the control signal from the autonomous driving ECU 20. Accordingly, the steering actuator controls the steering torque of the autonomous driving vehicle 2.

Next, an example of a functional configuration of the autonomous driving ECU 20 will be described. The autonomous driving ECU 20 includes a vehicle position acquisition unit 20a, an external environment recognition unit 20b, a traveling state recognition unit 20c, a remote control request unit 20d, a trajectory generation unit 20e, and an autonomous driving controller(reception unit, traveling controller) 20f.

The vehicle position acquisition unit 20a acquires vehicle position information about the autonomous driving vehicle 2 based on the position information from the GPS reception unit 21 and the map information in the map database 24. Further, the vehicle position acquisition unit 20a may acquire the vehicle position information about the autonomous driving vehicle 2 by the simultaneous localization and mapping (SLAM) technology by using target information included in the map information in the map database 24 and a detection result of the external sensor 22. The vehicle position acquisition unit 20a may recognize a lateral position of the autonomous driving vehicle 2 with respect to the lane (position of the autonomous driving vehicle 2 in a lane width direction) from a vehicle position relationship between a lane marking line and the autonomous driving vehicle 2 and include the lateral position in the vehicle position information. The vehicle position acquisition unit 20a may acquire the vehicle position information about the autonomous driving vehicle 2 by another well-known method.

The external environment recognition unit 20b recognizes the external environment of the autonomous driving vehicle 2 based on the detection result of the external sensor 22. The external environment includes a relative position of a surrounding object with respect to the autonomous driving vehicle 2. The external environment information may include a relative speed and a moving direction of the surrounding object with respect to the autonomous driving vehicle 2. The external environment information may include the types of objects such as other vehicles, pedestrians, and bicycles. The type of object can be identified by a well-known method such as pattern matching. The external environment information may include a result of lane marking recognition (white line recognition) around the autonomous driving vehicle 2. The external environment information may include a recognition result of a lighting state of the traffic light. The external environment recognition unit 20b may recognize the lighting state of the traffic light in front of the autonomous driving vehicle 2 (whether it is a lighting state that allows passage, a lighting state that prohibits passage, or the like), for example, based on the image of the camera of the external sensor 22.

The traveling state recognition unit 20c recognizes the traveling state of the autonomous driving vehicle 2 based on the detection result of the internal sensor 23. The traveling state includes the vehicle speed of the autonomous driving vehicle 2, the acceleration of the autonomous driving vehicle 2, and the yaw rate of the autonomous driving vehicle 2. Specifically, the traveling state recognition unit 20c recognizes the vehicle speed of the autonomous driving vehicle 2 based on the vehicle speed information of the vehicle speed sensor. The traveling state recognition unit 20c recognizes the acceleration of the autonomous driving vehicle 2 based on the vehicle speed information of the acceleration sensor. The traveling state recognition unit 20c recognizes the direction of the autonomous driving vehicle 2 based on the yaw rate information of the yaw rate sensor.

The remote control request unit 20d determines whether or not the remote operator R has to be requested to perform remote control. The remote control request unit 20d determines whether or not the remote control has to be requested based on, for example, the vehicle position information about the autonomous driving vehicle 2 acquired by the vehicle position acquisition unit 20a and the map information in the map database 24, or the external environment recognized by the external environment recognition unit 20b. When the remote control request unit 20d determines that the remote control has to be requested, the remote control request unit 20d transmits the remote control request to the vehicle remote control server 4.

The remote control request unit 20d determines that the remote control has to be requested when the autonomous driving vehicle 2 is in preset situations in which the remote control has to be requested. Examples of situations in which the remote control has to be requested include a situation in which lane departure avoidance for obstacles in front of the vehicle is needed, a situation in which the autonomous driving vehicle 2 turns right at an intersection, a situation in which the vehicle enters an intersection with or without a traffic light, a situation in which the vehicle passes a traffic light (for example, a situation in which the vehicle passes a traffic light corresponding to a crosswalk in the middle of a road), a situation in which the vehicle starts changing lanes, a situation in which the vehicle enters a construction section, a situation in which the vehicle enters a railroad crossing, a situation in which the vehicle turns left at an intersection (when the purpose is to check the possibility of collision on the side during turning), a situation in which it is checked whether the vehicle can start safely for passengers based on the video of the camera inside the vehicle, and a situation in which it is checked whether the door can be opened and closed safely based on videos of cameras inside and outside the vehicle.

Further, the remote control request unit 20d transmits sensor information, which is the detection result of the external sensor 22, to the vehicle remote control server 4 together with the remote control request. The sensor information is information used in the determination when the remote operator R performs remote control. For example, the sensor information may be an image (video) captured by the camera, point cloud information for the LIDAR, or the like. Further, the sensor information is not limited to the information indicating the detection result of the external sensor 22, such as a camera, as it is. This sensor information may be information after the object recognition processing or the like is performed based on the detection result of the external sensor 22. For example, the sensor information may be external environment information recognized by the external environment recognition unit 20b. Further, for example, the sensor information may be information obtained by changing the viewpoint of an actual video or image of a camera. Further, for example, the sensor information may be a video or image generated from 3D model information instead of an actual video or image.

As described above, the remote operator R can perform remote control on the autonomous driving vehicle 2, regardless of whether or not there is a request from the autonomous driving vehicle 2. Therefore, the remote control request unit 20d can transmit the sensor information to the vehicle remote control server 4 regardless of whether or not the remote control request is transmitted.

Further, the remote control request unit 20d may transmit, to the vehicle remote control server 4, vehicle information about the autonomous driving vehicle 2 (identification information, vehicle position information, and the like, for the autonomous driving vehicle 2) and traveling state information about the autonomous driving vehicle 2 (information such as vehicle speed and yaw rate), together with the sensor information. In addition, the remote control request unit 20d may transmit, to the vehicle remote control server 4, traffic rule/regulation information (vehicle speed limit information obtained based on the position of the host vehicle, restriction information for the traveling direction (right turn lane, or the like), color information for the recognized traffic light, and the like), together with the sensor information.

The trajectory generation unit 20e generates a trajectory used for autonomous driving of the autonomous driving vehicle 2. The trajectory generation unit 20e generates a trajectory for autonomous driving based on a preset travel route, map information, position information about the autonomous driving vehicle 2, an external environment of the autonomous driving vehicle 2, and a traveling state of the autonomous driving vehicle 2.

The travel route is a route on which the autonomous driving vehicle 2 travels by the autonomous driving. The trajectory generation unit 20e obtains a travel route for autonomous driving based on, for example, a destination, map information, and position information about the autonomous driving vehicle 2. The travel route may be set by a well-known navigation system. The destination may be set by the occupant of the autonomous driving vehicle 2, or may be automatically proposed by the autonomous driving ECU 20, the navigation system, or the like.

The trajectory includes a path along which the vehicle travels by autonomous driving and a vehicle speed profile in autonomous driving. The path is a trajectory on which the vehicle that is autonomously driving will travel on the travel route. The path can be, for example, data of a change in the steering angle of the autonomous driving vehicle 2 based on the position on the travel route (steering angle profile). The position on the travel route is, for example, a set vertical position set at predetermined intervals (for example, 1 m) in the traveling direction on the travel route. The steering angle profile is data in which a target steering angle is associated with each set vertical position.

The trajectory generation unit 20e generates a path along which the autonomous driving vehicle 2 travels, for example, based on the travel route, the map information, the external environment of the autonomous driving vehicle 2, and the traveling state of the autonomous driving vehicle 2. The trajectory generation unit 20e generates a path such that, for example, the autonomous driving vehicle 2 passes through the center of the lane included in the travel route (center in the lane width direction).

The vehicle speed profile is, for example, data in which a target vehicle speed is associated with each set vertical position. The set vertical position may be set based on a travel time of the autonomous driving vehicle 2 instead of the distance. The set vertical position may be set as an arrival position after 1 second of the vehicle and an arrival position after 2 seconds of the vehicle.

The trajectory generation unit 20e generates a vehicle speed profile based on traffic regulation information such as a legal speed included in the path and map information, for example. Instead of the legal speed, a preset speed for a position or section on the map may be used. The trajectory generation unit 20e generates a trajectory for autonomous driving from the path and the vehicle speed profile. The method of generating a trajectory in the trajectory generation unit 20e is not limited to the above-mentioned contents, and a well-known method regarding autonomous driving can be employed. The same applies to the content of the trajectory.

When the remote control request unit 20d requests remote control for the vehicle remote control server 4, the trajectory generation unit 20e generates a trajectory corresponding to the remote control. Here, when the content of the remote control is predetermined, the trajectory generation unit 20e may generate a trajectory corresponding to the remote control in advance. Alternatively, the trajectory generation unit 20e may generate a trajectory according to the remote control after receiving the remote control information from the vehicle remote control server 4.

The autonomous driving controller 20f executes autonomous driving of the autonomous driving vehicle 2. The autonomous driving controller 20f executes autonomous driving of the autonomous driving vehicle 2 based on, for example, the external environment of the autonomous driving vehicle 2, the traveling state of the autonomous driving vehicle 2, and the trajectory generated by the trajectory generation unit 20e. The autonomous driving controller 20f executes autonomous driving of the autonomous driving vehicle 2 by transmitting a control signal to the actuator 26.

Further, when the autonomous driving controller 20f receives the remote control information from the vehicle remote control server 4 via the communication unit 25, the autonomous driving controller 20f controls the traveling of the autonomous driving vehicle 2 based on the trajectory corresponding to the remote control information.

### [Vehicle Remote Control Device]

As illustrated in FIG. 1, the vehicle remote control device 3 is a device that performs remote control of the autonomous driving vehicle 2. The vehicle remote control device 3 includes a vehicle remote control server 4 and an operator interface 5. In the present embodiment, a plurality of operator interfaces 5 are provided.

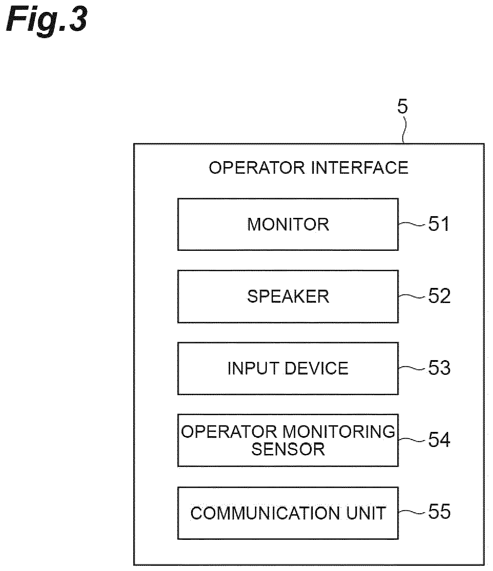

The operator interface 5 is an interface used by the remote operator R to perform remote control of the autonomous driving vehicle 2. More specifically, as illustrated in FIG. 3, the operator interface 5 includes a monitor 51, a speaker 52, an input device (input accepting unit) 53, an operator monitoring sensor 54, and a communication unit 55.

The monitor 51 and the speaker 52 are devices that present various types of information regarding the remote control of the autonomous driving vehicle 2, which is the target of the remote control, to the remote operator R based on the instruction from the vehicle remote control server 4. Here, the monitor 51 presents at least the sensor information of the external sensor 22 of the autonomous driving vehicle 2. The monitor 51 can display (present), for example, an image of a camera of the external sensor 22 mounted on the autonomous driving vehicle 2.

An input device 53 is a device in which the remote control of the autonomous driving vehicle 2 is input by the remote operator R. That is, the input device 53 accepts the input of the remote control by the remote operator R.

As the input device 53, for example, hardware such as a button, a switch, and a touch panel, or a keyboard, mouse, or the like for input via a computer can be used. The remote operator R may give, for example, "approval of vehicle behavior", "start instruction", "right turn or left turn instruction", "lane change instruction", "numerical instruction of vehicle speed/acceleration/deceleration amount", or the like, as remote control, by using the input device 53. Further, the remote operator R can give an instruction to perform correct/incorrect input on or correct the recognition result of the external environment or the like recognized by the autonomous driving vehicle 2, by using the input device 53.

For example, when the remote operator R gives "approval of vehicle behavior", "start instruction", "right turn or left turn instruction", or "lane change instruction", any of a button, a switch, a touch panel, and a mouse can be used as the input device 53. Further, for example, when the remote operator R performs correct/incorrect input on the recognition result recognized by the autonomous driving vehicle 2 (for example, when the external environment recognition unit 20b recognizes that the lighting color of the traffic light is red, but the remote operator R corrects the color to blue), any of a button, a switch, a touch panel, and a mouse can be used as the input device 53. Similarly, when the remote operator R corrects the recognition result recognized by the autonomous driving vehicle 2 (for example, when the external environment recognition unit 20b recognizes that there is a vehicle in the vicinity, but the remote operator R corrects the recognition to "no vehicle"), any of a button, a switch, a touch panel, and a mouse can be used as the input device 53. Further, for example, when the remote operator R performs "numerical instruction of vehicle speed/acceleration/deceleration amount", either a volume switch or keyboard input can be used as the input device 53.

The remote operator R may perform use of the various input devices 53 described above and various remote controls simultaneously in a plurality of types. For example, the remote operator R may simultaneously perform a button operation and a volume switch operation in order to suppress the vehicle speed while giving a lane change instruction. In addition, the remote operator R may correct a plurality of types of recognition results of the autonomous driving vehicle 2. For example, a plurality of traffic lights are installed in the same direction in many cases. In this case, the recognition results of a plurality of traffic lights may be erroneous due to sunlight. When correcting these, the remote operator R may correct a plurality of recognition results displayed on the display screen of the touch panel by operating the touch panel.

The operator monitoring sensor 54 is a sensor for monitoring the state of the remote operator R that performs remote control of the autonomous driving vehicle 2. The operator monitoring sensor 54 includes, for example, an operator monitoring camera and an operator monitoring microphone. The operator monitoring camera is a camera that captures an image of the remote operator R. The image captured by the operator monitoring camera can be used to determine which part of the display screen of the monitor 51 is being gazed at by acquiring the direction of the line of sight and/or the direction of the face of the remote operator R. Further, the image captured by the operator monitoring camera can be used to determine whether or not the pointing and calling operation is performed when the remote operator R performs remote control. The voice detected by the operator monitoring microphone can be used to determine whether or not the pointing and calling operation is performed when the remote operator R performs remote control.

The communication unit 55 is a device that communicates with the vehicle remote control server 4. The communication unit 55 receives the information presented by the monitor 51 and the speaker 52 from the vehicle remote control server 4. The communication unit 55 transmits the remote control information indicating the remote control input to the input device 53 to the vehicle remote control server 4. Further, the communication unit 55 transmits the operator monitoring information, which is the detection result of the operator monitoring sensor 54, to the vehicle remote control server 4.

### [Vehicle Remote Control Server]

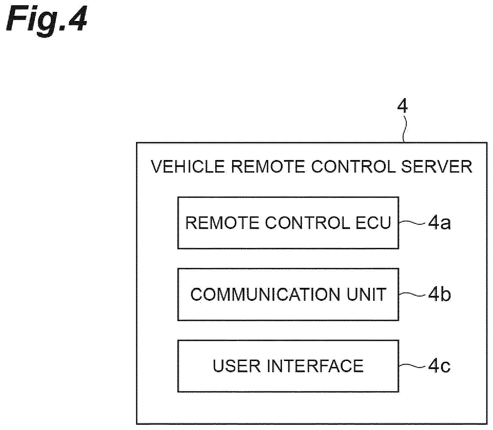

FIG. 4 is a block diagram illustrating an example of a hardware configuration of the vehicle remote control server 4. As illustrated in FIG. 4, the vehicle remote control server 4 can be configured as a general computer including a remote control ECU 4a, a communication unit 4b, and a user interface 4c.

The remote control ECU 4a operates various operating systems to control the vehicle remote control server 4. The remote control ECU 4a is an electronic control unit including a CPU, a ROM, a RAM, and the like, similar to autonomous driving ECU 20. The remote control ECU 4a controls the communication unit 4b and the user interface 4c.

The communication unit 4b is a communication device for communicating with the autonomous driving vehicle 2 via the network N. Further, the communication unit 4b communicates with the operator interface 5. As the communication unit 4b, a network device, a network controller, a network card, or the like can be used. The user interface 4c is an input/output unit of the vehicle remote control server 4 for a user such as an administrator. The user interface 4c includes an output device such as a display and a speaker, and an input device such as a touch panel. The vehicle remote control server 4 does not necessarily have to be installed in the facility, and may be mounted on a moving body such as a vehicle. The vehicle remote control server 4 may be composed of a plurality of computers.

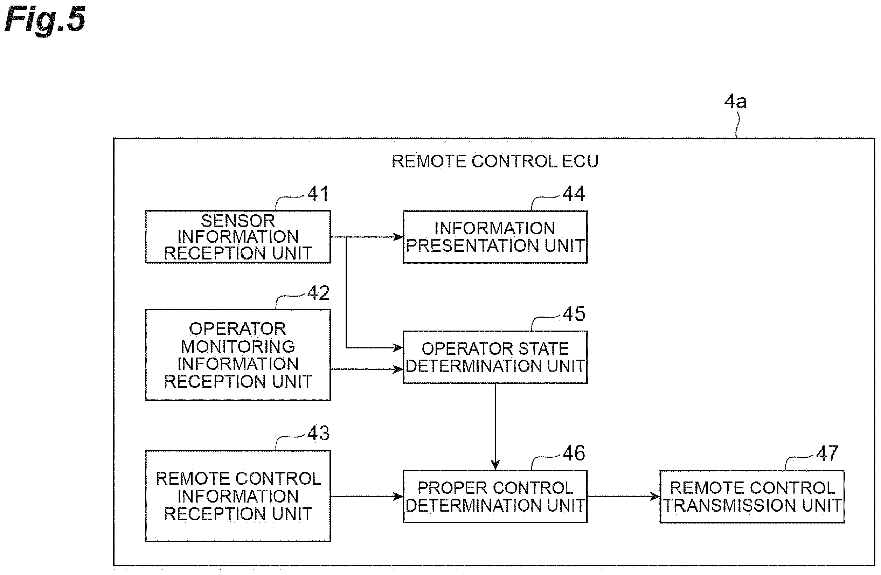

Next, a functional configuration of the remote control ECU 4a will be described. FIG. 5 is a block diagram illustrating an example of the functional configuration of the remote control ECU 4a. As illustrated in FIG. 5, the remote control ECU 4a functionally includes a sensor information reception unit 41, an operator monitoring information reception unit 42, a remote control information reception unit 43, an information presentation unit 44, an operator state determination unit 45, a proper control determination unit 46, and a remote control transmission unit (transmission unit) 47.

The sensor information reception unit 41 receives the sensor information of the external sensor 22 transmitted by the remote control request unit 20d of the autonomous driving vehicle 2 via the communication unit 4b. In addition, when the above-mentioned remote control request, vehicle information, and the like are transmitted together with the sensor information, the sensor information reception unit 41 also receives these pieces of information. The operator monitoring information reception unit 42 receives the operator monitoring information, which is the detection result of the operator monitoring sensor 54, from the operator interface 5 via the communication unit 4b.

The remote control information reception unit 43 receives the remote control information indicating the remote control input by the remote operator R to the input device 53 from the operator interface 5 via the communication unit 4b.

The information presentation unit 44 presents various types of information for the remote operator R to perform remote control of the autonomous driving vehicle 2 through the monitor 51 and the speaker 52. When the remote control request is received by the sensor information reception unit 41, the information presentation unit 44 presents the sensor information received by the sensor information reception unit 41 to the remote operator R through the monitor 51 and the speaker 52 of the operator interface 5. For example, the information presentation unit 44 can display an image of the surroundings of the autonomous driving vehicle 2, which is captured by the camera of the external sensor 22, on the monitor 51 as the sensor information. Further, when the vehicle information or the like is received by the sensor information reception unit 41 in addition to the sensor information, the information presentation unit 44 presents the received vehicle information or the like to the remote operator R through the monitor 51 and the speaker 52.

As described above, the remote operator R can remotely control the autonomous driving vehicle 2, regardless of whether or not there is a request from the autonomous driving vehicle 2. In this case, regardless of whether or not the remote control request is received, the information presentation unit 44 presents the sensor information received by the sensor information reception unit 41 to the remote operator R through the monitor 51 and the speaker 52 of the operator interface 5.

In addition, the information presentation unit 44 displays, on the monitor 51, a gaze target area and a gaze effective time set by the operator state determination unit 45 together with the sensor information. The gaze target area and the gaze effective time will be described in detail later.

The operator state determination unit 45 determines whether or not the remote operator R is in a proper control state suitable for remote control. Here, the operator state determination unit 45 determines whether or not the remote operator is in the proper control state, based on the gaze state of the remote operator R for the gaze target area of the sensor information displayed on the monitor 51.

More specifically, the operator state determination unit 45 sets a gaze target area to be gazed at by the remote operator R with respect to the sensor information to be displayed on the monitor 51 based on the sensor information received by the sensor information reception unit 41. Then, the operator state determination unit 45 determines whether or not the remote operator R is gazing at the gaze target area based on the operator monitoring information received by the operator monitoring information reception unit 42. When the remote operator R is gazing at the set gaze target area, the operator state determination unit 45 determines that the remote operator R is in the proper control state. Further, the operator state determination unit 45 determines that the remote operator R is not in the proper control state when the remote operator R is not gazing at the set gaze target area.

That is, the operator state determination unit 45 sets the gaze target area to be gazed at on the sensor information (for example, the camera image) displayed on the monitor 51. The operator state determination unit 45 determines whether or not the remote operator R is in the proper control state based on the gaze state for the gaze target area on the display screen of the monitor 51.

For example, the operator state determination unit 45 can determine that the remote operator R has gazed at the gaze target area when the remote operator R has turned his/her face or line of sight to the gaze target area based on the operator monitoring information.

Further, the operator state determination unit 45 may determine whether or not the gaze target area has been gazed based on the pointing direction of the pointing and calling by the remote operator R in addition to the direction of the face or the line of sight of the remote operator R. In this case, for example, the operator state determination unit 45 may determine that the remote operator R has gazed at the gaze target area when the remote operator R turns his/her face or line of sight to the gaze target area and the pointing direction of the pointing and calling directs the gaze target area based on the operator monitoring information.

Here, a specific example of the gaze target area will be described. The gaze target area is an area to be checked when the remote operator R performs remote control of the autonomous driving vehicle 2. The gaze target area is, for example, an area where it is determined that when the autonomous driving vehicle 2 makes a remote control request, the autonomous driving vehicle 2 cannot autonomously determine the situation or the like. The operator state determination unit 45 sets an object to be gazed at for remote control and an area (space) to be gazed at as a gaze target area.

For example, the remote control request unit 20d of the autonomous driving vehicle 2 may make a remote control request such as "I cannot determine whether the vehicle in front is stopped or parked. Can I overtake?". In this case, the operator state determination unit 45 sets the "vehicle in front of the autonomous driving vehicle 2" as a gaze target area for the remote operator R to perform remote control.

For example, the remote control request unit 20d of the autonomous driving vehicle 2 may make a remote control request such as "Can I change lanes?". In this case, the operator state determination unit 45 sets the "space before and after the lane change destination" as the gaze target area for the remote operator R to perform remote control.

For example, the remote control request unit 20d of the autonomous driving vehicle 2 may make a remote control request such as "Can I start at an intersection where a traffic light is installed?". In this case, the operator state determination unit 45 sets the "color of the traffic light (light emitting portion of the traffic light)" as the gaze target area for the remote operator R to perform remote control. Alternatively, when the traffic light is hidden or cannot be checked by the preceding vehicle, trees, sunlight, and the like, the operator state determination unit 45 sets the "surrounding vehicle" as the gaze target area for the remote operator R to perform remote control so that the vehicle can start in accordance with the movement of the surrounding vehicle.

Here, in the above, the case where the operator state determination unit 45 sets the gaze target area when the remote control request is made by using a specific example has been described. The present disclosure is not limited thereto, and the vehicle remote control device 3 can perform remote control of the autonomous driving vehicle 2 even when there is no remote control request from the autonomous driving vehicle 2. In this case, the operator state determination unit 45 determines the surrounding situation of the autonomous driving vehicle 2 based on the sensor information received by the sensor information reception unit 41, and sets the gaze target area.

The operator state determination unit 45 determines that the state of the remote operator R is the proper control state while the remote operator R is gazing at the gaze target area. This is because it is considered that the remote operator R can appropriately determine the situation of the gaze target area while the remote operator R is looking at the gaze target area.

Further, the operator state determination unit 45 can determine that the state of the remote operator R is the proper control state even until a predetermined gaze effective time elapses after the remote operator R stops the gazing at the gaze target area (for example, after turning the line of sight). This is because when only a short time has elapsed since the remote operator R stopped gazing at the gaze target area, it is considered that the situation of the gaze target area has not changed much from the time when the remote operator R was gazing. In other words, after the predetermined gaze effective time has elapsed since the gazing at the gaze target area was stopped, it is highly possible that the situation of the gaze target area has changed significantly, and it is considered that check by the remote operator R is necessary again. Therefore, the operator state determination unit 45 determines that the state of the remote operator R is the proper control state until a predetermined gaze effective time elapses after the remote operator R stops the gazing at the gaze target area.

The "predetermined gaze effective time" used to determine the proper control state is set to a time during which the situation in the gaze target area does not change significantly after the remote operator R stops the gazing at the gaze target area. In addition, the predetermined gaze effective time may be a fixed value set in advance, or may be a value that changes based on various conditions.

For example, the operator state determination unit 45 may set a predetermined gaze effective time based on traffic rule/regulation information. The operator state determination unit 45 can use the information transmitted from the remote control request unit 20d of the autonomous driving vehicle 2 as the traffic rule/regulation information. In this case, for example, when the speed limit of the lane is fast, the operator state determination unit 45 may set a predetermined gaze effective time shorter than when the speed limit is slow. Further, for example, the operator state determination unit 45 may set a predetermined gaze effective time based on external environment of the autonomous driving vehicle 2. In this case, for example, when the distance to the surrounding object of the autonomous driving vehicle 2 is short, the operator state determination unit 45 may set the predetermined gaze effective time shorter than when the distance is long. The surrounding object may be a gaze target object or another object.

In this way, the operator state determination unit 45 determines that the state of the remote operator R is the proper control state for a period during which the remote operator R is gazing at the gaze target area and a period from when the gazing at the gaze target area ends until a predetermined gaze effective time elapses.

Here, the information presentation unit 44 described above may notify the remote operator R when the operator state determination unit 45 determines that the remote operator R is gazing at the gaze target area. The information presentation unit 44 can perform this notification by displaying the monitor 51 or lighting a lamp provided in the operator interface 5.

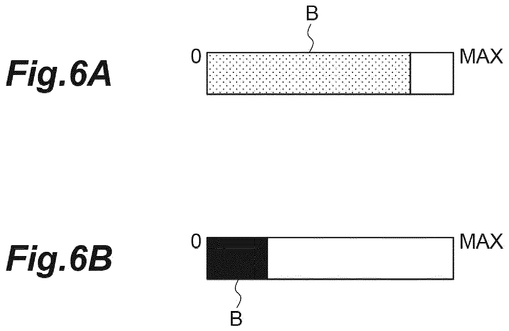

Further, the information presentation unit 44 may display, on the monitor 51, the above-mentioned gaze effective time at which the counting is started after the remote operator R ends the gazing at the gaze target area. In this case, the information presentation unit 44 may display a gaze effective time bar B of which the length becomes shorter as the gaze effective time decreases, on the monitor 51, for example, as illustrated in FIG. 6A. For example, the information presentation unit 44 sets the length of the gaze effective time bar B to the length of "MAX" while the remote operator R is gazing at the gaze target area. Then, the information presentation unit 44 may shorten the length of the gaze effective time bar B with the elapse of time after the remote operator R ends the gazing at the gaze target area.

In addition, as illustrated in FIGS. 6A and 6B, the information presentation unit 44 may change the color of the gaze effective time bar B according to the length of the gaze effective time. In this case, for example, the information presentation unit 44 may change the color of the gaze effective time bar B to a warning color (for example, red) as the gaze effective time becomes shorter.

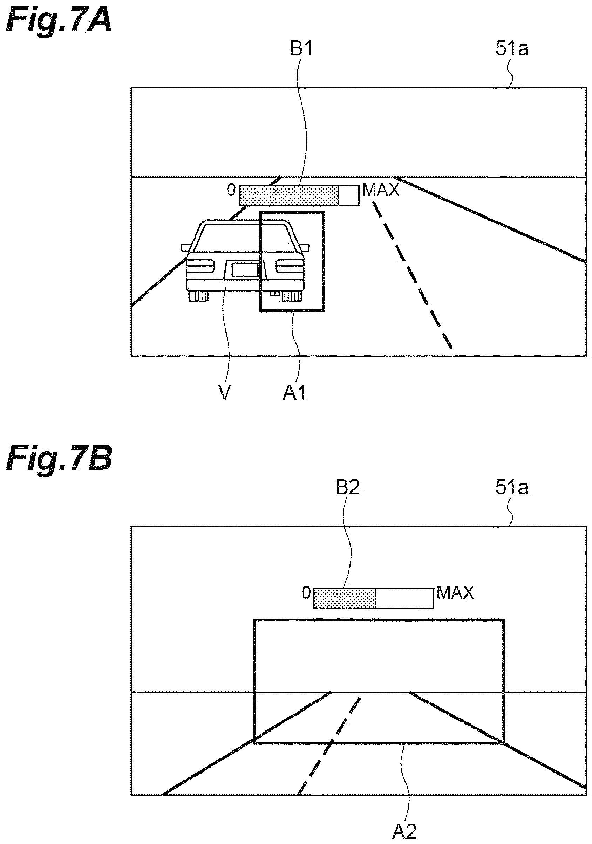

Further, the information presentation unit 44 displays, on the monitor 51, the gaze target area and the gaze effective time set by the operator state determination unit 45 together with the sensor information. Specifically, as illustrated in FIGS. 7A and 7B, the information presentation unit 44 displays, on the display screen 51a of the monitor 51, the gaze target area and the gaze effective time bar in the state of being superimposed on the camera image, for example.

The example illustrated in FIG. 7A is an image captured by a camera that images the front of the autonomous driving vehicle 2. Then, in this example, a gaze target area A1 for checking the presence or absence of a person jumping out of a parked vehicle V is illustrated. Further, a gaze effective time bar B 1 for the gaze target area A1 is displayed at the upper part of the gaze target area A1. The example illustrated in FIG. 7B is an image captured by a camera that images the rear of the autonomous driving vehicle 2. Then, in this example, a gaze target area A2 for checking the double overtaking of a vehicle, a motorcycle, or the like from the rear (overtaking of the parked vehicle V and the autonomous driving vehicle 2) is illustrated. Further, a gaze effective time bar B2 for the gaze target area A2 is displayed at the upper part of the gaze target area A2.

FIGS. 7A and 7B illustrate a case where a gaze effective time bar is set in each of the gaze target areas. The present disclosure is not limited thereto, and when there are a plurality of gaze target areas, the information presentation unit 44 may indicate gaze effective times of the gaze target areas by one gaze effective time bar. In this case, the information presentation unit 44 may display the gaze effective time bar of the shortest gaze effective time among all the gaze effective times.

The proper control determination unit 46 determines whether or not the remote control accepted by the input device 53 is proper based on a result of the determination of the operator state determination unit 45. Specifically, when the remote control is accepted by the input device 53, the proper control determination unit 46 determines that the accepted remote control is proper when the operator state determination unit 45 determines that the state of the remote operator R is the proper control state. On the other hand, when the remote control is accepted by the input device 53, the proper control determination unit 46 determines that the accepted remote control is not proper when the operator state determination unit 45 determines that the state of the remote operator R is not the proper control state.

Here, when it is determined that the remote control is not proper, the information presentation unit 44 feeds back to the remote operator R that the remote control was not input in the proper control state. Specifically, when the proper control determination unit 46 determines that the accepted remote control is not proper, the information presentation unit 44 highlights, on the monitor 51, the gaze target area used in the determination by the operator state determination unit 45. That is, after the remote operator R inputs the remote control, the gaze target area that should have been gazed is highlighted. For example, the information presentation unit 44 highlights the gaze target area and displays the gaze target area in an unusual manner (color or brightness change, blinking, and the like).

In addition, as feedback that remote control was not input in the proper control state, the information presentation unit 44 may display a specific reason such as "the gaze effective time has elapsed" or "the pointing and calling was not recognized" on the monitor 51, output voice from the speaker 52, or the like.

The remote control transmission unit 47 transmits remote control information indicating the remote control accepted by the input device 53 of the operator interface 5 to the autonomous driving vehicle 2. Here, the remote control transmission unit 47 transmits the remote control information of the remote control determined to be proper by the proper control determination unit 46 to the autonomous driving vehicle 2. On the other hand, the remote control transmission unit 47 does not transmit the remote control information of the remote control determined to be improper by the proper control determination unit 46 to the autonomous driving vehicle 2.

### [Vehicle Remote Control Method]

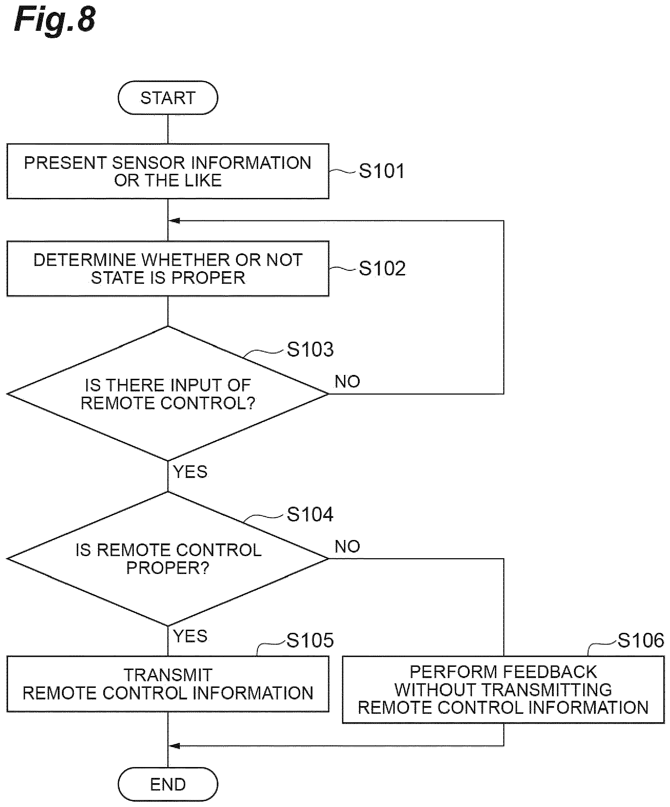

Next, a vehicle remote control method executed by the vehicle remote control device 3 will be described with reference to the flowchart of FIG. 8. Here, a case where a remote control request is transmitted from the autonomous driving vehicle 2 to the vehicle remote control device 3 and the vehicle remote control device 3 performs remote control of the autonomous driving vehicle 2 in response to the remote control request will be described as an example. The process illustrated in FIG. 8 is started when the sensor information reception unit 41 of the vehicle remote control server 4 receives the remote control request transmitted from the autonomous driving vehicle 2.

As illustrated in FIG. 8, when the remote control request is received, the information presentation unit 44 of the vehicle remote control server 4 presents, to the remote operator R, the sensor information, the vehicle information, and the like of the external sensor 22 transmitted from the autonomous driving vehicle 2 through the monitor 51 and the like (S101: information presentation step). The operator state determination unit 45 determines whether or not the remote operator R is in a proper control state suitable for performing the remote control, based on a gaze state of the remote operator R for a gaze target area of the sensor information presented by the information presentation unit 44 (information presentation step) (S 102: operator state determination step).

The proper control determination unit 46 determines whether or not the input of the remote control by the remote operator R has been accepted by the input device 53 (S103). When the remote control input is not accepted (S103: NO), the vehicle remote control device 3 returns to the process of S102 described above.

On the other hand, when the input of the remote control is accepted (S103: YES), the proper control determination unit 46 determines whether or not the accepted remote control is proper (S 104: input acceptance step, proper control determination step) based on the result of the determination of the operator state determination unit 45 (operator state determination step). Specifically, as the proper control determination step, when the operator state determination unit 45 determines that the remote operator is in the proper control state when the remote control is accepted, the proper control determination unit 46 determines that the accepted remote control is proper. Further, when the operator state determination unit 45 determines that the remote operator is not in the proper control state when the remote control is accepted, the proper control determination unit 46 determines that the accepted remote control is not proper.

When the remote control is proper (S104: YES), the remote control transmission unit 47 transmits the remote control information of the remote control determined to be proper to the autonomous driving vehicle 2 that has made the remote control request (S105: transmission step). On the other hand, when the remote control is not proper (S104: NO), the remote control transmission unit 47 does not transmit the remote control information of the remote control determined to be proper to the autonomous driving vehicle 2 that has made the remote control request. Further, the information presentation unit 44 feeds back to the remote operator R that the remote control was not input in the proper control state (S106).

### [Vehicle Remote Control Program]

A vehicle remote control program causes the remote control ECU 4a of the vehicle remote control server 4 to function (operate) as the above-mentioned information presentation unit 44, operator state determination unit 45, proper control determination unit 46, and remote control transmission unit 47. The vehicle remote control program is provided by a non-transitory recording medium such as a ROM or a semiconductor memory, for example. In addition, the vehicle remote control program may be provided via communication such as a network.

According to the vehicle remote control device 3 (vehicle remote control system 1, vehicle remote control method, and remote control program) described above, when the remote operator R inputs the remote control in a proper control state suitable for the remote control, the remote control information is transmitted to the autonomous driving vehicle 2. On the other hand, according to the vehicle remote control device 3 (vehicle remote control system 1, vehicle remote control method, and remote control program) described above, when the remote operator R inputs the remote control in a state unsuitable for the remote control, the remote control information is not transmitted to the autonomous driving vehicle 2. In this way, the vehicle remote control device 3 (vehicle remote control system 1, vehicle remote control method, and remote control program) can transmit appropriate remote control information input by the remote operator R in a proper control state to the autonomous driving vehicle.

The operator state determination unit 45 sets a gaze target area to be gazed at by the remote operator R with respect to the presented sensor information. Then, when the remote operator R is gazing at the set gaze target area, the operator state determination unit 45 determines that the remote operator R is in the proper control state. In this case, the vehicle remote control device 3 can more appropriately determine whether or not the remote operator R is in the proper control state suitable for remote control by using the presence or absence of gaze in the gaze target area.

The operator state determination unit 45 determines that the remote operator R is in the proper control state for a period during which the remote operator R is gazing at the gaze target area. Here, when only a short time has elapsed since the remote operator R stopped gazing at the gaze target area, it is considered that the situation of the gaze target area has not changed much from the time when the remote operator R was gazing. Therefore, the operator state determination unit 45 further determines that the remote operator is in the proper control state also in a period from when the gazing at the gaze target area ends until a predetermined gaze effective time elapses. In this case, the vehicle remote control device 3 can more appropriately determine whether or not the remote operator is in the proper control state based on the gaze state for the gaze target area.

When the operator state determination unit 45 determines that the accepted remote control is not proper, the information presentation unit 44 highlights the gaze target area used in the determination by the operator state determination unit 45. In this case, the vehicle remote control device 3 can inform the remote operator R of an area at which the remote operator R should have gazed in order to be in the proper control state. Thereby, the remote operator R can grasp a gaze target area to be gazed at. Then, the remote operator R can learn a gazing method needed to be in the proper control state based on this feedback.

Although the embodiment of the present disclosure has been described above, the present disclosure is not limited to the above-described embodiment. For example, the operator state determination unit 45 may determine whether or not the remote operator is in the proper control state, based on the gaze state of the remote operator R for the gaze target area of the sensor information. As described above, the operator state determination unit 45 is not limited to determining that the remote operator is in the proper control state when the remote operator is gazing at the gaze target area. Further, as described above, the operator state determination unit 45 is not limited to determining that the remote operator R is not in the proper control state when the remote operator R is not gazing at the gaze target area.

Further, the operator state determination unit 45 determines that the remote operator R is in the proper control state for a period during which the remote operator R is gazing at the gaze target area and a period from when the gazing at the gaze target area ends until a predetermined gaze effective time elapses. However, the period for which the operator state determination unit 45 determines that the remote operator is in the proper control state is not limited to the periods described above.

Further, the information presentation unit 44 may not highlight the gaze target area even when it is determined that the remote control is not proper. The information presentation unit 44 may give feedback that the remote control is not proper to the remote operator R by a method other than highlighting the gaze target area, and may not give such feedback.

## Claims

1. A vehicle remote control device (3) adapted to execute remote control of an autonomous driving vehicle by a remote operator (R), the vehicle remote control device (3) comprising:
an information presentation unit (44) configured to present sensor information of an in-vehicle sensor of the autonomous driving vehicle;
an input accepting unit (53) configured to accept an input of the remote control by the remote operator; the vehicle remote control device (3) being **characterised in that** it further comprises:
an operator state determination unit (45) configured to determine whether or not the remote operator (R) is in a proper control state suitable for performing the remote control, based on a gaze state of the remote operator for a gaze target area of the sensor information presented by the information presentation unit (44);
a proper control determination unit (46) configured to determine whether or not the remote control accepted by the input accepting unit (53) is proper based on a result of the determination of the operator state determination unit (45); and
a transmission unit (47) configured to transmit, to the autonomous driving vehicle, remote control information indicating the remote control accepted by the input accepting unit (53), wherein
the operator state determination unit (45) is configured to set the gaze target area to be gazed at by the remote operator with respect to the presented sensor information based on the sensor information, to determine that the remote operator is in the proper control state when the remote operator gazes at the set gaze target area, and to determine that the remote operator is not in the proper control state when the remote operator does not gaze at the set gaze target area,
the proper control determination unit (46) is configured to determine that the accepted remote control is proper when the operator state determination unit (45) determines that the remote operator is in the proper control state when the remote control is accepted, and to determine that the accepted remote control is not proper when the operator state determination unit (45) determines that the remote operator is not in the proper control state when the remote control is accepted, and
the transmission unit (47) is configured to transmit, to the autonomous driving vehicle, the remote control information for the remote control determined as being proper by the proper control determination unit (46), and not to transmit, to the autonomous driving vehicle, the remote control information for the remote control determined as not being proper by the proper control determination unit (46).

2. The vehicle remote control device (3) according to claim 1, wherein the operator state determination unit (45) is configured to determine that the remote operator is in the proper control state for a period during which the remote operator is gazing at the gaze target area and a period from when the gazing at the gaze target area ends until a predetermined gaze effective time elapses.

3. The vehicle remote control device (3) according to claim 1 or 2, wherein the information presentation unit is configured to highlight the gaze target area used in the determination by the operator state determination unit (45) when the proper control determination unit (46) determines that the accepted remote control is not proper.

4. A vehicle remote control system (1) comprising:
an autonomous driving vehicle (2); and
a vehicle remote control device (3) that executes remote control of the autonomous driving vehicle (2) by a remote operator (R), wherein
the vehicle remote control device (3) includes:
an information presentation unit (44) configured to present sensor information of an in-vehicle sensor of the autonomous driving vehicle;
an input accepting unit (53) configured to accept an input of the remote control by the remote operator; the vehicle remote control system (1) being **characterised in that** the vehicle remote control device (3) further comprises:
an operator state determination unit (45) configured to determine whether or not the remote operator is in a proper control state suitable for performing the remote control, based on a gaze state of the remote operator for a gaze target area of the sensor information presented by the information presentation unit;
a proper control determination unit (46) configured to determine whether or not the remote control accepted by the input accepting unit (53) is proper based on a result of the determination of the operator state determination unit (45); and
a transmission unit (47) configured to transmit, to the autonomous driving vehicle, remote control information indicating the remote control accepted by the input accepting unit (53),
the operator state determination unit (45) is configured to set the gaze target area to be gazed at by the remote operator with respect to the presented sensor information based on the sensor information, to determine that the remote operator is in the proper control state when the remote operator gazes at the set gaze target area, and to determine that the remote operator is not in the proper control state when the remote operator does not gaze at the set gaze target area,
the proper control determination unit (46) is configured to determine that the accepted remote control is proper when the operator state determination unit (45) determines that the remote operator is in the proper control state when the remote control is accepted, and to determine that the accepted remote control is not proper when the operator state determination unit (45) determines that the remote operator is not in the proper control state when the remote control is accepted,
the transmission unit (47) is configured to transmit, to the autonomous driving vehicle, the remote control information for the remote control determined as being proper by the proper control determination unit, and not to transmit, to the autonomous driving vehicle, the remote control information for the remote control determined as not being proper by the proper control determination unit, and
the autonomous driving vehicle includes:
a reception unit (43) configured to receive the remote control information transmitted from the transmission unit; and
a traveling controller (20f) configured to control traveling of the autonomous driving vehicle based on the received remote control information.

5. A vehicle remote control method that is performed by a vehicle remote control device (3) executing remote control of an autonomous driving vehicle (2) by a remote operator (R), the vehicle remote control method comprising:
presenting sensor information of an in-vehicle sensor of the autonomous driving vehicle (2);
accepting an input of the remote control by the remote operator (R); the method being **characterised in that**:
determining whether or not the remote operator is in a proper control state suitable for performing the remote control, based on a gaze state of the remote operator for a gaze target area of the sensor information presented in the step of presenting the sensor information;
determining whether or not the remote control accepted in the step of accepting the input is proper based on a result of the determination in the step of determining for the remote operator; and
transmitting, to the autonomous driving vehicle (2), remote control information indicating the remote control accepted in the step of accepting the input, wherein
in the step of determining for the remote operator, the gaze target area to be gazed at by the remote operator is set with respect to the presented sensor information based on the sensor information, and a determination is made that the remote operator is in the proper control state when the remote operator gazes at the set gaze target area, and a determination is made that the remote operator is not in the proper control state when the remote operator does not gaze at the set gaze target area,
in the step of determining for the remote control, a determination is made that the accepted remote control is proper when it is determined in the step of determining for the remote operator that the remote operator is in the proper control state when the remote control is accepted, and a determination is made that the accepted remote control is not proper when it is determined in the step of determining for the remote operator that the remote operator is not in the proper control state when the remote control is accepted, and
in the step of transmitting, the remote control information for the remote control determined as being proper in the step of determining for the remote control is transmitted to the autonomous driving vehicle, and the remote control information for the remote control determined as not being proper in the step of determining for the remote control is not transmitted to the autonomous driving vehicle.

6. A vehicle remote control program adapted to operate a remote control ECU of a vehicle remote control device that executes remote control of an autonomous driving vehicle (2) by a remote operator (R) based on an input to an input accepting unit configured to accept the input of the remote control, the vehicle remote control program causing the remote control ECU to function as:
an information presentation unit (44) configured to present sensor information of an in-vehicle sensor of the autonomous driving vehicle; and **characterised in that** the vehicle remote control program is further configured to function as:
an operator state determination unit (45) configured to determine whether or not the remote operator is in a proper control state suitable for performing the remote control, based on a gaze state of the remote operator for a gaze target area of the sensor information presented by the information presentation unit (44);
a proper control determination unit (46) configured to determine whether or not the remote control accepted by the input accepting unit (53) is proper based on a result of the determination of the operator state determination unit (45); and
a transmission unit (47) configured to transmit, to the autonomous driving vehicle (2), remote control information indicating the remote control accepted by the input accepting unit (53), wherein
the operator state determination unit (45) is caused to set the gaze target area to be gazed at by the remote operator with respect to the presented sensor information based on the sensor information, to determine that the remote operator is in the proper control state when the remote operator gazes at the set gaze target area, and to determine that the remote operator is not in the proper control state when the remote operator does not gaze at the set gaze target area.
the proper control determination unit (46) is caused to determine that the accepted remote control is proper when the operator state determination unit (45) determines that the remote operator is in the proper control state when the remote control is accepted, and to determine that the accepted remote control is not proper when the operator state determination unit (45) determines that the remote operator is not in the proper control state when the remote control is accepted, and
the transmission unit (47) is caused to transmit, to the autonomous driving vehicle, the remote control information for the remote control determined as being proper by the proper control determination unit (46), and not to transmit, to the autonomous driving vehicle, the remote control information for the remote control determined as not being proper by the proper control determination unit (46).

## Patentansprüche

1. Fahrzeug-Fernsteuervorrichtung (3), die dazu geeignet ist, die Fernsteuerung eines autonom fahrenden Fahrzeugs durch einen Fernbediener (R) auszuführen, wobei die Fahrzeug-Fernsteuervorrichtung (3) umfasst:
eine Informations-Darstellungseinheit (44), die dazu ausgestaltet ist, Sensorinformationen eines fahrzeuginternen Sensors des autonom fahrenden Fahrzeugs darzustellen,
eine Eingabe-Annahmeeinheit (53), die dazu ausgestaltet ist, eine Eingabe der Fernsteuerung durch den Fernbediener anzunehmen, wobei die Fahrzeug-Fernsteuervorrichtung (3) **dadurch gekennzeichnet ist, dass** sie ferner umfasst:
eine Bedienerzustands-Bestimmungseinheit (45), die dazu ausgestaltet ist, zu bestimmen, ob der Fernbediener (R) in einem korrekten Steuerzustand, der zur Durchführung der Fernsteuerung geeignet ist, ist oder nicht, auf Grundlage eines Blickzustands des Fernbedieners für einen Blickzielbereich der Sensorinformationen, die von der Informations-Darstellungseinheit (44) dargestellt werden,
eine Einheit zur Bestimmung der korrekten Steuerung (46), die dazu ausgestaltet ist, zu bestimmen, ob die Fernsteuerung, die von der Eingabe-Annahmeeinheit (53) angenommen wurde, korrekt ist oder nicht, auf Grundlage eines Ergebnisses der Bestimmung der Bedienerzustands-Bestimmungseinheit (45), und
eine Übertragungseinheit (47), die dazu ausgestaltet ist, an das autonom fahrende Fahrzeug Fernsteuerungsinformationen zu übertragen, welche die Fernsteuerung angeben, die von der Eingabe-Annahmeeinheit (53) angenommen wurde, wobei
die Bedienerzustands-Bestimmungseinheit (45) dazu ausgestaltet ist, den Blickzielbereich, auf welchen der Fernbediener in Bezug auf die dargestellten Sensorinformationen blicken soll, auf Grundlage der Sensorinformationen festzulegen, zu bestimmen, dass der Fernbediener in dem korrekten Steuerzustand ist, wenn der Fernbediener auf den festgelegten Blickzielbereich blickt, und zu bestimmen, dass der Fernbediener nicht in dem korrekten Steuerzustand ist, wenn der Fernbediener nicht auf den festgelegten Blickzielbereich blickt,
die Einheit zur Bestimmung der korrekten Steuerung (46) dazu ausgestaltet ist, zu bestimmen, dass die angenommene Fernsteuerung korrekt ist, wenn die Bedienerzustands-Bestimmungseinheit (45) bestimmt, dass der Fernbediener in dem korrekten Steuerzustand ist, wenn die Fernsteuerung angenommen wird, und zu bestimmen, dass die angenommene Fernsteuerung nicht korrekt ist, wenn die Bedienerzustands-Bestimmungseinheit (45) bestimmt, dass der Fernbediener nicht in dem korrekten Steuerzustand ist, wenn die Fernsteuerung angenommen wird, und
die Übertragungseinheit (47) dazu ausgestaltet ist, an das autonom fahrende Fahrzeug die Fernsteuerungsinformationen für die Fernsteuerung, die von der Einheit zur Bestimmung der korrekten Steuerung (46) als korrekt bestimmt wurde, zu übertragen und an das autonom fahrende Fahrzeug die Fernsteuerungsinformationen für die Fernsteuerung, die von der Einheit zur Bestimmung der korrekten Steuerung (46) als nicht korrekt bestimmt wurde, nicht zu übertragen.

2. Fahrzeug-Fernsteuervorrichtung (3) nach Anspruch 1, wobei die Bedienerzustands-Bestimmungseinheit (45) dazu ausgestaltet ist, zu bestimmen, dass der Fernbediener in dem korrekten Steuerzustand für eine Periode ist, während der der Fernbediener auf den Blickzielbereich blickt, und eine Periode ab dem Zeitpunkt, zu dem der Blick auf den Blickzielbereich endet, bis eine vorbestimmte effektive Blickzeit abläuft.

3. Fahrzeug-Fernsteuervorrichtung (3) nach Anspruch 1 oder 2, wobei die Informations-Darstellungseinheit dazu ausgestaltet ist, den Blickzielbereich hervorzuheben, der in der Bestimmung durch die Bedienerzustands-Bestimmungseinheit (45) verwendet wird, wenn die Einheit zur Bestimmung der korrekten Steuerung (46) bestimmt, dass die angenommene Fernsteuerung nicht korrekt ist.

4. Fahrzeug-Fernsteuersystem (1), umfassend:
ein autonom fahrendes Fahrzeug (2), und
eine Fahrzeug-Fernsteuervorrichtung (3), welche die Fernsteuerung des autonom fahrenden Fahrzeugs (2) durch einen Fernbediener (R) ausführt, wobei
die Fahrzeug-Fernsteuervorrichtung (3) beinhaltet:
eine Informations-Darstellungseinheit (44), die dazu ausgestaltet ist, Sensorinformationen eines fahrzeuginternen Sensors des autonom fahrenden Fahrzeugs darzustellen,
eine Eingabe-Annahmeeinheit (53), die dazu ausgestaltet ist, eine Eingabe der Fernsteuerung durch den Fernbediener anzunehmen, wobei das Fahrzeug-Fernsteuersystem (1) **dadurch gekennzeichnet ist, dass** die Fahrzeug-Fernsteuervorrichtung (3) ferner umfasst:
eine Bedienerzustands-Bestimmungseinheit (45), die dazu ausgestaltet ist, zu bestimmen, ob der Fernbediener in einem korrekten Steuerzustand, der zur Durchführung der Fernsteuerung geeignet ist, ist oder nicht, auf Grundlage eines Blickzustands des Fernbedieners für einen Blickzielbereich der Sensorinformationen, die von der Informations-Darstellungseinheit dargestellt werden,
eine Einheit zur Bestimmung der korrekten Steuerung (46), die dazu ausgestaltet ist, zu bestimmen, ob die Fernsteuerung, die von der Eingabe-Annahmeeinheit (53) angenommen wurde, korrekt ist oder nicht, auf Grundlage eines Ergebnisses der Bestimmung der Bedienerzustands-Bestimmungseinheit (45), und
eine Übertragungseinheit (47), die dazu ausgestaltet ist, an das autonom fahrende Fahrzeug Fernsteuerungsinformationen zu übertragen, welche die Fernsteuerung angeben, die von der Eingabe-Annahmeeinheit (53) angenommen wurde,
die Bedienerzustands-Bestimmungseinheit (45) dazu ausgestaltet ist, den Blickzielbereich, auf welchen der Fernbediener in Bezug auf die dargestellten Sensorinformationen blicken soll, auf Grundlage der Sensorinformationen festzulegen, zu bestimmen, dass der Fernbediener in dem korrekten Steuerzustand ist, wenn der Fernbediener auf den festgelegten Blickzielbereich blickt, und zu bestimmen, dass der Fernbediener nicht in dem korrekten Steuerzustand ist, wenn der Fernbediener nicht auf den festgelegten Blickzielbereich blickt,
die Einheit zur Bestimmung der korrekten Steuerung (46) dazu ausgestaltet ist, zu bestimmen, dass die angenommene Fernsteuerung korrekt ist, wenn die Bedienerzustands-Bestimmungseinheit (45) bestimmt, dass der Fernbediener in dem korrekten Steuerzustand ist, wenn die Fernsteuerung angenommen wird, und zu bestimmen, dass die angenommene Fernsteuerung nicht korrekt ist, wenn die Bedienerzustands-Bestimmungseinheit (45) bestimmt, dass der Fernbediener nicht in dem korrekten Steuerzustand ist, wenn die Fernsteuerung angenommen wird,
die Übertragungseinheit (47) dazu ausgestaltet ist, an das autonom fahrende Fahrzeug die Fernsteuerungsinformationen für die Fernsteuerung, die von der Einheit zur Bestimmung der korrekten Steuerung als korrekt bestimmt wurde, zu übertragen und an das autonom fahrende Fahrzeug die Fernsteuerungsinformationen für die Fernsteuerung, die von der Einheit zur Bestimmung der korrekten Steuerung als nicht korrekt bestimmt wurde, nicht zu übertragen und
das autonom fahrende Fahrzeug beinhaltet:
eine Empfangseinheit (43), die dazu ausgestaltet ist, die Fernsteuerungsinformationen zu empfangen, die von der Übertragungseinheit übertragen werden, und
ein Fahrtsteuergerät (20f), das dazu ausgestaltet ist, die Fahrt des autonom fahrenden Fahrzeugs auf Grundlage der empfangenen Fernsteuerungsinformationen zu steuern.

5. Fahrzeug-Fernsteuerverfahren, das durch eine Fahrzeug-Fernsteuervorrichtung (3) durchgeführt wird, welche die Fernsteuerung eines autonom fahrenden Fahrzeugs (2) durch einen Fernbediener (R) ausführt, wobei das Fahrzeug-Fernsteuerverfahren umfasst:
Darstellen von Sensorinformationen eines fahrzeuginternen Sensors des autonom fahrenden Fahrzeugs (2),
Annehmen einer Eingabe der Fernsteuerung durch den Fernbediener (R), wobei das Verfahren **dadurch gekennzeichnet ist, dass**:
bestimmt wird, ob der Fernbediener in einem korrekten Steuerzustand, der zur Durchführung der Fernsteuerung geeignet ist, ist oder nicht, auf Grundlage eines Blickzustands des Fernbedieners für einen Blickzielbereich der Sensorinformationen, die in dem Schritt des Darstellens der Sensorinformationen dargestellt werden,
bestimmt wird, ob die in dem Schritt des Annehmens der Eingabe angenommene Fernsteuerung korrekt ist oder nicht, auf Grundlage eines Ergebnisses der Bestimmung in dem Schritt der Bestimmung für den Fernbediener, und
an das autonom fahrende Fahrzeug (2) Fernsteuerungsinformationen übertragen werden, welche die in dem Schritt des Annehmens der Eingabe angenommene Fernsteuerung angeben,
wobei
in dem Schritt der Bestimmung für den Fernbediener der Blickzielbereich, auf welchen der Fernbediener in Bezug auf die dargestellten Sensorinformationen blicken soll, auf Grundlage der Sensorinformationen festgelegt wird, und eine Bestimmung vorgenommen wird, dass der Fernbediener in dem korrekten Steuerzustand ist, wenn der Fernbediener auf den festgelegten Blickzielbereich blickt, und eine Bestimmung vorgenommen wird, dass der Fernbediener nicht in dem korrekten Steuerzustand ist, wenn der Fernbediener nicht auf den festgelegten Blickzielbereich blickt,
in dem Schritt des Bestimmens für die Fernsteuerung eine Bestimmung vorgenommen wird, dass die angenommene Fernsteuerung korrekt ist, wenn in dem Schritt des Bestimmens für den Fernbediener bestimmt wird, dass der Fernbediener in dem korrekten Steuerzustand ist, wenn die Fernsteuerung angenommen wird, und eine Bestimmung vorgenommen wird, dass die angenommene Fernsteuerung nicht korrekt ist, wenn in dem Schritt des Bestimmens für den Fernbediener bestimmt wird, dass der Fernbediener nicht in dem korrekten Steuerzustand ist, wenn die Fernsteuerung angenommen wird, und
in dem Schritt des Übertragens die Fernsteuerungsinformationen für die Fernsteuerung, die in dem Schritt des Bestimmens für die Fernsteuerung als korrekt bestimmt wurde, an das autonom fahrende Fahrzeug übertragen werden, und die Fernsteuerungsinformationen für die Fernsteuerung, die in dem Schritt des Bestimmens für die Fernsteuerung als nicht korrekt bestimmt wurde, nicht an das autonom fahrende Fahrzeug übertragen werden.

6. Fahrzeug-Fernsteuerungsprogramm, das dazu geeignet ist, eine Fernsteuerungs-ECU einer Fahrzeug-Fernsteuervorrichtung zu betreiben, welche die Fernsteuerung eines autonom fahrenden Fahrzeugs (2) durch einen Fernbediener (R) ausführt, auf Grundlage einer Eingabe in eine Eingabe-Annahmeeinheit, die dazu ausgestaltet ist, die Eingabe der Fernsteuerung anzunehmen, wobei das Fahrzeug-Fernsteuerungsprogramm die Fernsteuerungs-ECU veranlasst, zu wirken als:
eine Informations-Darstellungseinheit (44), die dazu ausgestaltet ist, Sensorinformationen eines fahrzeuginternen Sensors des autonom fahrenden Fahrzeugs darzustellen,
und **dadurch gekennzeichnet, dass** das Fahrzeug-Fernsteuerungsprogramm ferner dazu ausgestaltet ist, zu wirken als:
eine Bedienerzustands-Bestimmungseinheit (45), die dazu ausgestaltet ist, zu bestimmen, ob der Fernbediener in einem korrekten Steuerzustand, der zur Durchführung der Fernsteuerung geeignet ist, ist oder nicht, auf Grundlage eines Blickzustands des Fernbedieners für einen Blickzielbereich der Sensorinformationen, die von der Informations-Darstellungseinheit (44) dargestellt werden,
eine Einheit zur Bestimmung der korrekten Steuerung (46), die dazu ausgestaltet ist, zu bestimmen, ob die Fernsteuerung, die von der Eingabe-Annahmeeinheit (53) angenommen wurde, korrekt ist oder nicht, auf Grundlage eines Ergebnisses der Bestimmung der Bedienerzustands-Bestimmungseinheit (45), und
eine Übertragungseinheit (47), die dazu ausgestaltet ist, an das autonom fahrende Fahrzeug (2) Fernsteuerungsinformationen zu übertragen, welche die Fernsteuerung angeben, die von der Eingabe-Annahmeeinheit (53) angenommen wurde, wobei
die Bedienerzustands-Bestimmungseinheit (45) dazu veranlasst wird, den Blickzielbereich, auf welchen der Fernbediener in Bezug auf die dargestellten Sensorinformationen blicken soll, auf Grundlage der Sensorinformationen festzulegen, zu bestimmen, dass der Fernbediener in dem korrekten Steuerzustand ist, wenn der Fernbediener auf den festgelegten Blickzielbereich blickt, und zu bestimmen, dass der Fernbediener nicht in dem korrekten Steuerzustand ist, wenn der Fernbediener nicht auf den festgelegten Blickzielbereich blickt,
die Einheit zur Bestimmung der korrekten Steuerung (46) dazu veranlasst wird, zu bestimmen, dass die angenommene Fernsteuerung korrekt ist, wenn die Bedienerzustands-Bestimmungseinheit (45) bestimmt, dass der Fernbediener in dem korrekten Steuerzustand ist, wenn die Fernsteuerung angenommen wird, und zu bestimmen, dass die angenommene Fernsteuerung nicht korrekt ist, wenn die Bedienerzustands-Bestimmungseinheit (45) bestimmt, dass der Fernbediener nicht in dem korrekten Steuerzustand ist, wenn die Fernsteuerung angenommen wird, und
die Übertragungseinheit (47) dazu veranlasst wird, an das autonom fahrende Fahrzeug die Fernsteuerungsinformationen für die Fernsteuerung, die von der Einheit zur Bestimmung der korrekten Steuerung (46) als korrekt bestimmt wurde, zu übertragen und an das autonom fahrende Fahrzeug die Fernsteuerungsinformationen für die Fernsteuerung, die von der Einheit zur Bestimmung der korrekten Steuerung (46) als nicht korrekt bestimmt wurde, nicht zu übertragen.

## Revendications

1. Dispositif de télécommande de véhicule (3) prévu pour exécuter une commande à distance d'un véhicule à conduite autonome grâce à un opérateur à distance (R), le dispositif de télécommande de véhicule (3) comprenant :
une unité de présentation d'information (44) configurée pour présenter de l'information de capteur d'un capteur dans le véhicule du véhicule à conduite autonome ;
une unité d'acceptation d'entrée (53) configurée pour accepter une entrée de la commande à distance par l'opérateur à distance ; le dispositif de télécommande de véhicule (3) étant **caractérisé en ce qu'**il comprend en outre :
une unité de détermination d'état d'opérateur (45) configurée pour déterminer si l'opérateur à distance (R) est ou non dans un état de commande correcte adapté à la réalisation de la commande à distance, sur la base d'un état de regard de l'opérateur à distance pour une zone de cible de regard de l'information de capteur présentée par l'unité de présentation d'information (44) ;
une unité de détermination de commande correcte (46) configurée pour déterminer si la commande à distance acceptée par l'unité d'acceptation d'entrée (53) est correcte ou non sur la base d'un résultat de la détermination de l'unité de détermination d'état d'opérateur (45) ; et
une unité de transmission (47) configurée pour transmettre, au véhicule à conduite autonome, de l'information de commande à distance indiquant la commande à distance acceptée par l'unité d'acceptation d'entrée (53),
l'unité de détermination d'état d'opérateur (45) étant configurée pour établir la zone de cible de regard devant être regardée par l'opérateur à distance par rapport à l'information de capteur présentée sur la base de l'information de capteur, pour déterminer que l'opérateur à distance est dans l'état de commande correcte quand l'opérateur à distance regarde la zone de cible de regard de consigne, et pour déterminer que l'opérateur à distance n'est pas dans l'état de commande correcte quand l'opérateur à distance ne regarde pas la zone de cible de regard de consigne,
l'unité de détermination de commande correcte (46) étant configurée pour déterminer que la commande à distance acceptée est correcte quand l'unité de détermination d'état d'opérateur (45) détermine que l'opérateur à distance est dans l'état de commande correcte quand la commande à distance est acceptée, et pour déterminer que la commande à distance acceptée n'est pas correcte quand l'unité de détermination d'état d'opérateur (45) détermine que l'opérateur à distance n'est pas dans l'état de commande correcte quand la commande à distance est acceptée, et
l'unité de transmission (47) étant configurée pour transmettre, au véhicule à conduite autonome, l'information de commande à distance pour la commande à distance déterminée comme étant correcte par l'unité de détermination de commande correcte (46), et pour ne pas transmettre, au véhicule à conduite autonome, l'information de commande à distance pour la commande à distance déterminée comme n'étant pas correcte par l'unité de détermination de commande correcte (46).

2. Dispositif de télécommande de véhicule (3) selon la revendication 1, dans lequel l'unité de détermination d'état d'opérateur (45) est configurée pour déterminer que l'opérateur à distance est dans l'état de commande correcte pendant une période au cours de laquelle l'opérateur à distance regarde la zone de cible de regard et une période à partir du moment où le regard de la zone de cible de regard se termine jusqu'à ce qu'un temps effectif de regard prédéterminé s'écoule.

3. Dispositif de télécommande de véhicule (3) selon la revendication 1 ou 2, dans lequel l'unité de présentation d'information est configurée pour accentuer la zone de cible de regard utilisée dans la détermination par l'unité de détermination d'état d'opérateur (45) quand l'unité de détermination de commande correcte (46) détermine que la commande à distance acceptée n'est pas correcte.

4. Système de télécommande de véhicule (1) comprenant :
un véhicule à conduite autonome (2) ; et
un dispositif de télécommande de véhicule (3) qui exécute une commande à distance du véhicule à conduite autonome (2) grâce à un opérateur à distance (R), dans lequel
le dispositif de télécommande de véhicule (3) comprend :
une unité de présentation d'information (44) configurée pour présenter de l'information de capteur d'un capteur dans le véhicule du véhicule à conduite autonome ;
une unité d'acceptation d'entrée (53) configurée pour accepter une entrée de la commande à distance par l'opérateur à distance ; le système de télécommande de véhicule (1) étant **caractérisé en ce que** le dispositif de télécommande de véhicule (3) comprend en outre :
une unité de détermination d'état d'opérateur (45) configurée pour déterminer si l'opérateur à distance est ou non dans un état de commande correcte adapté à la réalisation de la commande à distance, sur la base d'un état de regard de l'opérateur à distance pour une zone de cible de regard de l'information de capteur présentée par l'unité de présentation d'information ;
une unité de détermination de commande correcte (46) configurée pour déterminer si la commande à distance acceptée par l'unité d'acceptation d'entrée (53) est correcte ou non sur la base d'un résultat de la détermination de l'unité de détermination d'état d'opérateur (45) ; et
une unité de transmission (47) configurée pour transmettre, au véhicule à conduite autonome, de l'information de commande à distance indiquant la commande à distance acceptée par l'unité d'acceptation d'entrée (53),
l'unité de détermination d'état d'opérateur (45) est configurée pour établir la zone de cible de regard devant être regardée par l'opérateur à distance par rapport à l'information de capteur présentée sur la base de l'information de capteur, pour déterminer que l'opérateur à distance est dans l'état de commande correcte quand l'opérateur à distance regarde la zone de cible de regard de consigne, et pour déterminer que l'opérateur à distance n'est pas dans l'état de commande correcte quand l'opérateur à distance ne regarde pas la zone de cible de regard de consigne,
l'unité de détermination de commande correcte (46) est configurée pour déterminer que la commande à distance acceptée est correcte quand l'unité de détermination d'état d'opérateur (45) détermine que l'opérateur à distance est dans l'état de commande correcte quand la commande à distance est acceptée, et pour déterminer que la commande à distance acceptée n'est pas correcte quand l'unité de détermination d'état d'opérateur (45) détermine que l'opérateur à distance n'est pas dans l'état de commande correcte quand la commande à distance est acceptée,
l'unité de transmission (47) est configurée pour transmettre, au véhicule à conduite autonome, l'information de commande à distance pour la commande à distance déterminée comme étant correcte par l'unité de détermination de commande correcte, et pour ne pas transmettre, au véhicule à conduite autonome, l'information de commande à distance pour la commande à distance déterminée comme n'étant pas correcte par l'unité de détermination de commande correcte, et
le véhicule à conduite autonome comprend :
une unité de réception (43) configurée pour recevoir l'information de commande à distance transmise à partir de l'unité de transmission ; et
un circuit de commande de déplacement (20f) configuré pour commander un déplacement du véhicule à conduite autonome sur la base de l'information de commande à distance reçue.

5. Procédé de télécommande de véhicule qui est mis en oeuvre par un dispositif de télécommande de véhicule (3) qui exécute une commande à distance d'un véhicule à conduite autonome (2) grâce à un opérateur à distance (R), le procédé de télécommande de véhicule comprenant le fait de :
présenter de l'information de capteur d'un capteur dans le véhicule du véhicule à conduite autonome (2) ;
accepter une entrée de la commande à distance par l'opérateur à distance (R) ; le procédé étant **caractérisé par** le fait de
déterminer si l'opérateur à distance est ou non dans un état de commande correcte adapté à la réalisation de la commande à distance, sur la base d'un état de regard de l'opérateur à distance pour une zone de cible de regard de l'information de capteur présentée dans l'étape de présentation de l'information de capteur ;
déterminer si la commande à distance acceptée dans l'étape d'acceptation de l'entrée est correcte ou non sur la base d'un résultat de la détermination dans l'étape de détermination pour l'opérateur à distance ; et
transmettre, au véhicule à conduite autonome (2), de l'information de commande à distance indiquant la commande à distance acceptée dans l'étape d'acceptation de l'entrée,
selon lequel
dans l'étape de détermination pour l'opérateur à distance, la zone de cible de regard devant être regardée par l'opérateur à distance est établie par rapport à l'information de capteur présentée sur la base de l'information de capteur, et une détermination est faite que l'opérateur à distance est dans l'état de commande correcte quand l'opérateur à distance regarde la zone de cible de regard de consigne, et une détermination est faite que l'opérateur à distance n'est pas dans l'état de commande correcte quand l'opérateur à distance ne regarde pas la zone de cible de regard de consigne,
dans l'étape de détermination pour la commande à distance, une détermination est faite que la commande à distance acceptée est correcte lorsque l'on détermine dans l'étape de détermination pour l'opérateur à distance que l'opérateur à distance est dans l'état de commande correcte quand la commande à distance est acceptée, et une détermination est faite que la commande à distance acceptée n'est pas correcte lorsque l'on détermine dans l'étape de détermination pour l'opérateur à distance que l'opérateur à distance n'est pas dans l'état de commande correcte quand la commande à distance est acceptée, et
dans l'étape de transmission, l'information de commande à distance pour la commande à distance déterminée comme étant correcte dans l'étape de détermination pour la commande à distance est transmise au véhicule à conduite autonome, et l'information de commande à distance pour la commande à distance déterminée comme n'étant pas correcte dans l'étape de détermination pour la commande à distance n'est pas transmise au véhicule à conduite autonome.

6. Programme de télécommande de véhicule prévu pour faire fonctionner une unité de commande électronique de télécommande d'un dispositif de télécommande de véhicule qui exécute une commande à distance d'un véhicule à conduite autonome (2) grâce à un opérateur à distance (R) sur la base d'une entrée dans une unité d'acceptation d'entrée configurée pour accepter l'entrée de la commande à distance, le programme de télécommande de véhicule amenant l'unité de commande électronique de télécommande à fonctionner comme :
une unité de présentation d'information (44) configurée pour présenter de l'information de capteur d'un capteur dans le véhicule du véhicule à conduite autonome ; et **caractérisé en ce que** le programme de télécommande de véhicule est en outre configuré pour fonctionner comme :
une unité de détermination d'état d'opérateur (45) configurée pour déterminer si l'opérateur à distance est ou non dans un état de commande correcte adapté à la réalisation de la commande à distance, sur la base d'un état de regard de l'opérateur à distance pour une zone de cible de regard de l'information de capteur présentée par l'unité de présentation d'information (44) ;
une unité de détermination de commande correcte (46) configurée pour déterminer si la commande à distance acceptée par l'unité d'acceptation d'entrée (53) est correcte ou non sur la base d'un résultat de la détermination de l'unité de détermination d'état d'opérateur (45) ; et
une unité de transmission (47) configurée pour transmettre, au véhicule à conduite autonome (2), de l'information de commande à distance indiquant la commande à distance acceptée par l'unité d'acceptation d'entrée (53),
l'unité de détermination d'état d'opérateur (45) étant amenée à établir la zone de cible de regard devant être regardée par l'opérateur à distance par rapport à l'information de capteur présentée sur la base de l'information de capteur, à déterminer que l'opérateur à distance est dans l'état de commande correcte quand l'opérateur à distance regarde la zone de cible de regard de consigne, et à déterminer que l'opérateur à distance n'est pas dans l'état de commande correcte quand l'opérateur à distance ne regarde pas la zone de cible de regard de consigne,
l'unité de détermination de commande correcte (46) étant amenée à déterminer que la commande à distance acceptée est correcte quand l'unité de détermination d'état d'opérateur (45) détermine que l'opérateur à distance est dans l'état de commande correcte quand la commande à distance est acceptée, et à déterminer que la commande à distance acceptée n'est pas correcte quand l'unité de détermination d'état d'opérateur (45) détermine que l'opérateur à distance n'est pas dans l'état de commande correcte quand la commande à distance est acceptée, et
l'unité de transmission (47) étant amenée à transmettre, au véhicule à conduite autonome, l'information de commande à distance pour la commande à distance déterminée comme étant correcte par l'unité de détermination de commande correcte (46), et à ne pas transmettre, au véhicule à conduite autonome, l'information de commande à distance pour la commande à distance déterminée comme n'étant pas correcte par l'unité de détermination de commande correcte (46).
